(19) Europäisches Patentamt
European Patent Office
Office européen des brevets

(11) **EP 3 077 848 B1**

## (12) EUROPEAN PATENT SPECIFICATION

(45) Date of publication and mention
of the grant of the patent:
**23.06.2021 Bulletin 2021/25**

(21) Application number: **14867367.6**

(22) Date of filing: **04.12.2014**

(51) Int Cl.:
$G01S\ 7/40$ *(2006.01)*    $G01S\ 13/34$ *(2006.01)*
$G01S\ 13/42$ *(2006.01)*    $G01S\ 7/35$ *(2006.01)*
$G01S\ 13/58$ *(2006.01)*    $G01S\ 13/02$ *(2006.01)*

(86) International application number:
**PCT/US2014/068668**

(87) International publication number:
**WO 2015/085120 (11.06.2015 Gazette 2015/23)**

(54) **METHODS AND APPARATUS FOR PROCESSING CODED APERTURE RADAR (CAR) SIGNALS**

VERFAHREN UND VORRICHTUNG ZUR VERARBEITUNG VON CAR-SIGNALEN

PROCÉDÉS ET APPAREILS DE TRAITEMENT DE SIGNAUX DE RADAR À SYNTHÈSE D'OUVERTURE (RSO)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2013 US 201361912990 P**

(43) Date of publication of application:
**12.10.2016 Bulletin 2016/41**

(73) Proprietor: **HRL Laboratories, LLC
Malibu, CA 90265-4799 (US)**

(72) Inventors:
• **LYNCH, Jonathan J.
Oxnard
California 93035 (US)**
• **XU, Zhiwei A.
Irvine
California 92620 (US)**
• **KUAN, Yen-Cheng
Los Angeles
California 90034 (US)**

(74) Representative: **Richards, John et al
Ladas & Parry LLP
Temple Chambers
3-7 Temple Avenue
London EC4Y 0DA (GB)**

(56) References cited:
**EP-A2- 1 607 763         US-A1- 2003 210 185
US-A1- 2007 052 580    US-A1- 2009 239 551
US-A1- 2012 092 211    US-A1- 2013 169 471
US-A1- 2013 169 485**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Cross Reference to Related Applications

This application claims priority to and the benefit of US Provisional Patent Application Serial No. 61/912,990, filed December 6, 2013 and entitled "A Method and Apparatus for Processing Coded Aperture Radar Signals". This application also claims priority to and claims the benefit of U.S. Application Serial No. 14/561,111 filed December 4, 2014.
This application is related to US Patent Application Serial No. 13/490,607 filed 06/07/2012 and entitled "Coded Aperture Beam Analysis Method and Apparatus".
US 13/490,607, published as US 2013/169485 A1, discloses a method and apparatus for determining the range, radial velocity, and bearing angles of scattering objects reflecting RF signals or for determining the range, radial velocity, and bearing angles of sources RF signals. An array of antenna elements is utilized, the array of antenna elements each having an associated two state modulator wherein transmitted and/or received energy is phase encoded according to a sequence of multibit codes, the bits of the multibit codes each preferably having two states with approximately a 50% probability for each of the two states occurring within each given multibit code in said sequence of multibit codes, thereby allowing the determination of range, radial velocity, and bearing angles through digital computation after the scattered signals have been received.
This application is also related to US Patent Application Serial No. 13/725,621, filed December 21, 2012 and entitled "Coded Aperture Beam Analysis Method and Apparatus".
This application is also related to US Patent Application Serial No. 14/561,142 filed on the same date as this application, December 4, 2014 and entitled "Method and Apparatus for Reducing Noise in a Coded Aperture Radar" (Attorney Docket 628971-7).

### Technical Field

This invention relates a method and apparatus for processing a Coded Aperture Radar (CAR) mixer output signal to estimate the range, velocity, and bearing angles of scattering objects in a short period of time and with relatively simple digital circuits. The CAR signal may be processed efficiently by multiplying the signal samples by "signal masks," each of which corresponding to a particular beam direction and stored in memory, and then processing the resulting data using traditional methods (e.g., FFTs) to produce the range/velocity information for each beam position.

### Background

CAR is a new technology that has not yet been implemented in IC form, therefore is no known prior art for processing methods and hardware for CAR signals.
The most straightforward method for CAR signal processing is to utilize a matched filter technique, which is common in radar signal processing. This technique consists of correlating the received signal against a library of reference signals, each of which corresponding to a scattering object at a particular range, velocity, and bearing angles. When the received signal contains a component due to a scattering object at the reference location, a strong output is produced, with the strength indicating the scattering cross section at the reference location. This technique is effective, but requires an often prohibitive amount of memory to store the reference signals, and significant computation to perform the correlations in a CPU (for example).
Comparing this invention to traditional digital beamforming radar, this invention reduces the computation time and/or the digital hardware complexity significantly, with an even bigger advantage for large arrays. Digital beamforming arrays possess a separate receiver and analog to digital converter (ADC) behind each of the array elements. The large number of output signals are then digitized and the directional beams with desired characteristics are produced by forming linear combinations of the element signals. This technique requires that digital information from all of the elements across the array be weighted and combined, with a separate linear combination for each beam position. This is highly computationally intensive and introduces significant latency for large arrays due to the limited speed with which basic digital calculations (e.g., multiplications) may be made.
One may try to reduce computation time by implementing the weighting and combining in digital hardware, thereby performing the computations in parallel. However, the fact that digital beamforming combines signals from all the elements creates highly complex combining networks that quickly become unfeasible as the array gets large and even more particularly so if the array is a two dimensional (2D) array.
Because the range, velocity, and spatial information for CAR are interdependent, it is not apparent that one may apply a simple set of multiplications and then utilize FFTs to produce estimates of range, velocity, and bearing angles.

# EP 3 077 848 B1

## Summary of the Invention

In one aspect the present invention provides a method of processing radar signals reflected from one or more objects in a field of view of a radar transmitter transmitting the radar signals. The method includes receiving and modulating the radar signals reflected from the one or more objects by plurality of binary phase shifters to produce a set of modulated signals, the binary phase shifters being controlled by binary coding data; summing the modulated signals and down converting them, preferably to base band, by a mixer producing in-phase and quadrature output signals which are each sampled and digitized by one or more A/D convertors to produce a set of real and imaginary digital values corresponding to the in-phase and quadrature output signals produced by the mixer during an acquisition of the field of view; distributing real and imaginary digital values corresponding to the in-phase and quadrature output signals produced by the mixer into a number of channels, the number of channels being equal to a number of desired radar beam directions to be processed concurrently and each channel having real and imaginary digital values corresponding to the digitized in-phase and quadrature signals output by the mixer; performing a complex multiplication using the real and imaginary digital values in each channel as one multiplicand and using real and imaginary values of a signal mask as the other multiplicand, the method comprising using a same number (S) of different signal masks as there are channels; one signal mask for each channel and for each channel being selected to produce a desired beam with desired characteristics for each channel, each complex multiplication producing a multiplication result which has both real and imaginary parts, the multiplication results or a summation of the multiplication results corresponding to the acquisition of the field of view being at least conceptually organizable into a two dimensional set or matrix with each column of the set or matrix corresponding to frequency steps of the transmitted radar signal and each row of the matrix corresponding to a different sweep of the transmitted radar signal; and transforming the real and imaginary parts of said multiplication results or of a summation of said multiplication results in said set or matrix using a transformational function which produces transformed data, conceptually as a set or matrix, wherein each position of the set or matrix of the transformed data reflects the scattering strength of an object in said field of view at a corresponding range with a corresponding radial velocity, with each column of the matrix of transformed data representing range bins and each row of the transformed data representing velocity bins.

## Brief Description of the Drawings

Fig. 1 shows a block diagram of CAR, with CAR coding on receive only for simplicity's sake.

Fig. 2 depicts a repetitive series of equal frequency steps which may be used in the radar transmitter, which repetitive series of equal frequency steps is especially convenient when used with the type I CAR coding technology discussed below.

Fig. 3 depicts functional block diagram for the digital hardware which may be utilized to practice the type I CAR coding discussed herein.

Fig. 3a depicts some of the functional block diagram for the digital hardware of Fig. 3 in more detail.

Fig. 3b shows an alternative embodiment of the CAR processing where multiple antenna elements (in a subarray of antenna elements) share a single 1-bit phase shifter.

Fig. 3c shows another alternative embodiment of the CAR processing technique described herein where a one to one relationship between antenna elements and 1-bit phase shifters is maintained, but where outputs of the antenna elements are the summed down to more than one port which ports are digitized independently by more than one A/D converter.

Fig. 4 depicts a repetitive series of equal frequency steps where N codes are utilized at each frequency step, N being preferable equal the number of synthesized beams within the field of view is especially convenient when used with the type II CAR coding technology discussed below.

Fig. 5 depicts a functional block diagram for the digital hardware which may be utilized to practice the type II CAR coding discussed herein.

Fig. 6 is a block diagram showing a conventional digital beamforming (DBF) radar.

**Detailed Description**

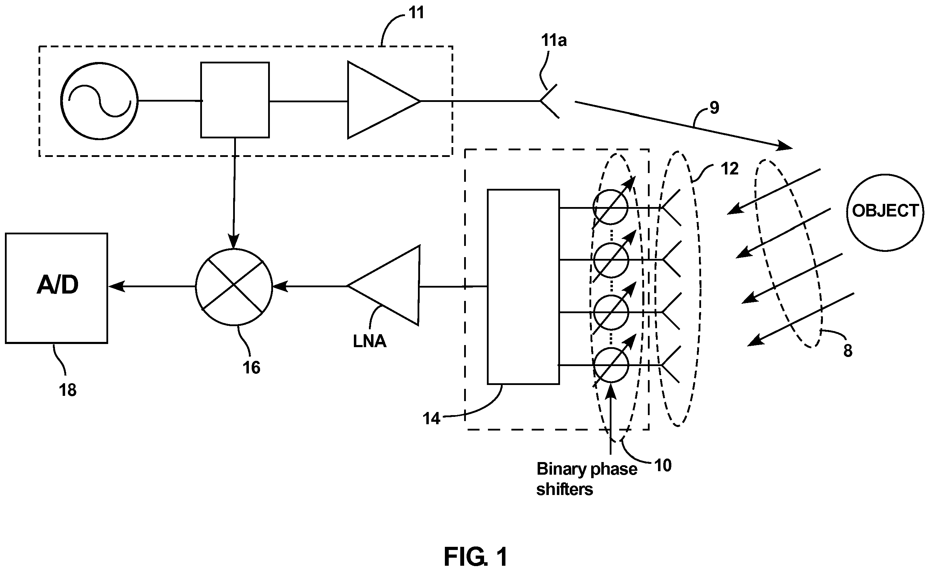

Fig. 1 shows a block diagram of CAR, with CAR coding on receive only which simplifies the hardware which is utilized. A radar signal 9 is transmitted from an antenna element 11a associated with a radar transmitter 11. The transmitted signal 9 covers a field of view (FOV) and energy is scattered from one or more objects within the FOV, which scattered energy 8 is received by an array of receiving radar antenna elements 12 associated with a radar receiver. In some embodiments, antenna elements may be shared by both the radar transmitter and the radar receiver (with appropriate switching to isolate the receiver from the relatively high energy signal which is typically transmitted by the transmitter to keep from damaging the receiver by that high energy signal). The array of receiving radar antenna elements 12, in practice, is preferably a two dimensional array, but a one dimensional array is more convenient for analysis and simulation and may be used in practice.

Each of the received signals is phase shifted (modulated) by either zero or 180 degrees by one of a plurality of binary (1-bit) phase shifters 10 each of which preferably located near or immediately adjacent an associated one of the antenna elements 12. The received scattered signals are thusly phase shifted (or not) depending on the state of a control word, a bit of which is applied to each binary phase shifter 10 (thus controlling whether it performs a 180 degree phase shift (or not) on the received scattered signals). The phase shifted signals downstream of the phase shifters 18 are then summed at 14 to a single RF output port in the depicted embodiment. The control word may be called an aperture code and thus the phase shifted signals downstream of the phase shifters 18 may be referred to as being "aperture coded" herein. The RF signal at the RF output port of the summer 14 may be first amplified by an optional low noise amplifier (LNA) and then down-converted (preferably to baseband) by a mixer 16 and digitized by a Analog to Digital Convertor (ADC) 18.

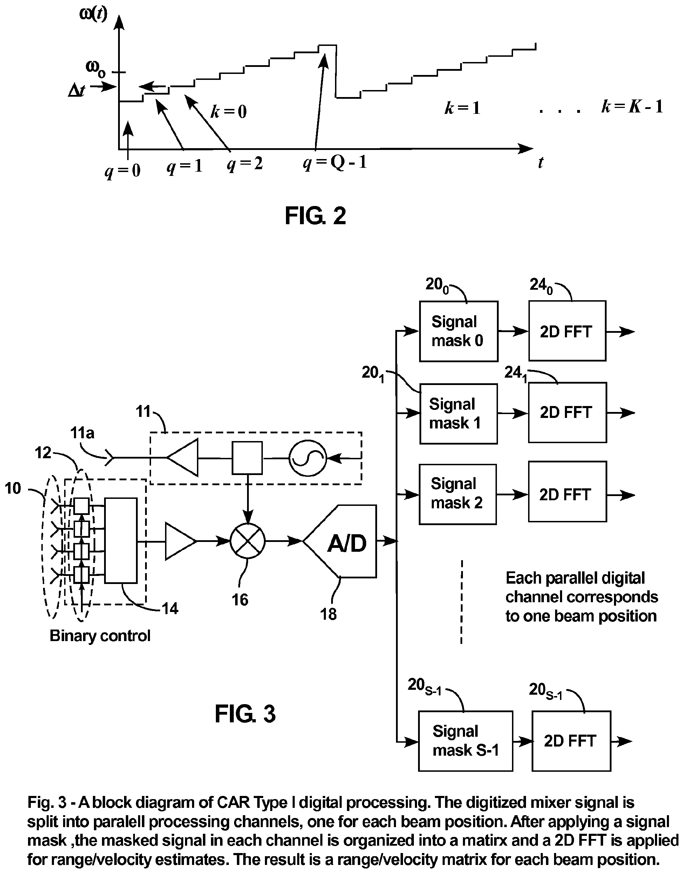

There are many possible transmitted signals 9 which may be utilized with CAR decoding on receive, but an especially convenient transmitted signal 9 is a signal which comprises a repetitive series of equal frequency steps, as shown in Fig. 2, with $q$ being the index of a frequency step in a sweep and k being the index of a sweep in an acquisition. The frequency of the transmitted signal 9 thus may consist of a series of equal steps that are repeated with one or more codes per step, Q steps per sweep, and K sweeps per acquisition. This type of signal is appropriate for relatively short range targets so that the total round trip delay time (of signals 9 and 8) is preferably much shorter than the sweep period of the transmitted signal 9. For this type of transmitted signal, one may implement the aperture coding scheme discussed above in one of two ways.

In Type I CAR coding, one may utilize a separate code for each frequency step (a separate code for each frequency sweep may be considered a special case with identical codes repeated throughout a particular sweep). In Type II CAR coding, one transmits a set of N codes during one frequency step, and repeating same for each step and for each sweep. The codes for different steps and/or sweeps may be identical or different, although the preferred embodiment is one with repeated codes with the codes being mutually orthogonal. We will consider the digital implementation of these two coding types separately, and will consider coding on receive only for simplicity, although this invention also applies to coding on transmit. The invention is easier to implement on receive, since when used on transmit if there are several objects scattering and the objects are at different ranges, the signals will be received at different times. Typically the round trip delay to a target and back will be longer than the duration of each frequency step, so the received signals will be spread out in time. This requires more complicated correlation processing. Coding on receive only occurs at the same time for all targets, so much simpler and more efficient FFT processing can be used.

Type I CAR coding

For a single ideal scatterer at range $r$, radial velocity $v$ (note that the velocity v is unscripted while the mixer voltage is $v_m$ has a subscript), and angular position $\Omega$, the mixer output voltage with a different code for each frequency step has the form

$$v_m = Ve^{-j\frac{2\omega_m}{c}(r+vm\Delta t)}g_m(\Omega) = Ve^{-j\frac{2\omega_m}{c}(r+vm\Delta t)}\sum_{n=0}^{N-1}S_{m,n}e_n(\Omega)$$

(Eqn. 1)

where $\omega_m$ are the radian frequency steps, $\Delta t$ (in the exponent) is the duration of each frequency step, $v$ (in the exponent) is velocity, $m$ is the time index, and $V$ is the amplitude that depends on various radar parameters such as transmit power, radar cross section, antenna gain, etc. The complex field pattern produced by the nth antenna element is denoted $e_n$ ($\Omega$), where $\Omega$ is shorthand notation for the spherical coordinate angles $\theta, \phi$. The complex field pattern produced by the receive elements, phase shifters, and summation network may then be written

$$g_m\left(\Omega\right) = \sum_{n=0}^{N-1} S_{m,n} e_n\left(\Omega\right),$$
(Eqn. 2)

where $S_{m,n}$ is a "coding matrix," defined as the complex transmission coefficient (i.e., S21) from the nth antenna element 10 to the summation network 14 output for the mth code.

We define $Q$ as the number of frequency steps per radar sweep and $K$ as the number of sweeps per acquisition. In practice, the parameters $Q$ and $K$ are selected to provide a desired number of range and velocity bins. The time index $m$ may be expressed in terms of the indices for the frequency step $q$ and sweep $k$ as $m = q + kQ$. The range and velocity resolutions are given by

$$\Delta r = \frac{c}{2\Delta f}, \quad \Delta v = \frac{c}{2f_o KQN\Delta t}.$$
(Eqn. 3)

Mathematically, the range and velocity variables run over positive and negative values, even though the negative range variables are meaningless in practice, so the maximum range and velocities (determined by the Nyquist criterion) are given by

$$r_{max} = \frac{1}{2}Q\Delta r, \quad v_{max} = \frac{1}{2}K\Delta v.$$
(Eqn. 4)

Estimates of range, velocity, and bearing angles from the mixer signal Eqn. 1 are obtained by first multiplying the mixer signal by a set of "signal masks," $s_m$ ($\Omega$') (note the lower case $s$) one for each of the desired receive beam directions $\Omega$':

$$\tilde{v}_m = v_m s_m\left(\Omega'\right).$$
(Eqn. 5)

We then organize the mixer voltage samples in matrix form with indices $q$, indicating the corresponding frequency step of the transmitted signal, and k indicating the corresponding sweep. Thus, the matrix values following the signal masking may be indicated by

$$\tilde{v}_{q,k}\left(\Omega'\right) = v_{q,k} s_{q,k}\left(\Omega'\right).$$
(Eqn. 5a)

Next we then multiply Eqn. 5a by a function $f_{q,k}(r', v')$ of reference range $r'$ and velocity $v'$ and sum over all values of the indices $q$ and $k$ to form an ambiguity function:

$$X\left(r',v',\Omega'\right) = \sum_{q=0}^{Q-1}\sum_{k=0}^{K-1} \tilde{v}_{q,k}\left(\Omega'\right) f_{q,k}\left(r',v'\right) . \qquad \text{(Eqn. 6)}$$

Peaks of the ambiguity function indicate values of range and velocity at which a strong scatter is located, within the beam direction $\Omega'$. One typically discretizes the antenna array field of view into discrete beam directions $\Omega = \Omega'_s$ using traditional techniques that are well known to those skilled in the art and that depend on details of the array design (aperture size, element size, etc.). The primed direction ($\Omega'_s$) indicates where the radar looks for scatterers. The unprimed direction ($\Omega$) is the direction of the actual scatterer. See Eqn. 1. When many scatterers are present the contributions from each add because the radar transceiver has a linear response, as is well known to those skilled in the art.

Once the beam directions are determined, there are many ways to choose the functions $s_{m,s} = s_m(\Omega'_s)$. One method is to use the conjugate of the spatial part of the signal from Eqn. 1:

$$s_{m,s} = g_m^*\left(\Omega'_s\right) = \sum_{n=0}^{N-1} S_{m,n}^* e_n^*\left(\Omega'_s\right) . \qquad \text{(Eqn. 7)}$$

Another method is to use a pseudo-inverse of the coding matrix to obtain estimates of the element signals, and then weight them with an amplitude taper $w_n$ for sidelobe control. For this case the choice is

$$s_{m,s} = \sum_{n=0}^{N-1} w_n \left(\left(S^H S\right)^{-1} S^H\right)_{n,m} e_n^*\left(\Omega'_s\right) \qquad \text{(Eqn. 8)}$$

where $(S^H S)^{-1} S^H$ is the pseudo-inverse of the coding matrix.

There are also many ways to choose the function $f_{q,k}(r',v')$ that will provide estimates for the range and velocity, but this is similar to the processing utilized in conventional radar and we may use any of the conventional methods. For a matched filter processor, the function f is given by:

$$f_{q,k}\left(r',v'\right) = e^{j\frac{2\omega_q}{c}\left(r'+\left(q+kQ\right)v'\Delta t\right)} . \qquad \text{(Eqn. 8a)}$$

In practice, reference range $r'$ and velocity $v'$ are chosen at discrete points, typically on a grid. The discretization of range and velocity produces what are commonly referred to as "range bins" and "velocity bins." When we multiply the masked digital samples by the function in Eqn. 8a and sum over all values of q and k as indicated in Eqn. 6, we are performing a mathematical transformation of the 2D matrix of digital values $\tilde{v}_{q,k}$. The result of this transformation is an ambiguity function matrix for each beam position $\Omega'_s$ whose two subscripts refer to specific range and velocity bins with the corresponding amplitude indicating the scattering strength of an object in that range and velocity bin. One can show that because we preferably utilize a linear FM sweep transmit radar and because we divide the range and velocity spaces into equal sized bins, Eqn. 8a is mathematically very similar to a 2D Fast Fourier Transform (FFT), and we may utilize a 2D FFT instead of the matched filter function shown in Eqn. 8a with negligible error.

To simplify this discussion we will assume matched filter processing to determine the range, radial velocity, and bearing angles of the object(s) within the field of view of the transmit radar. In practice, it is much more efficient in terms of processing time and hardware complexity to utilize FFTs for the range/velocity processing instead of a true matched filter. But this approach is valid for short range radars where the round trip time delay is short relative to the sweep period (for example, less than 10% of a single sweep period, such as in automotive radar). The use of FFTs for range/velocity processing is typically preferred, but since it is well known to those skilled in the art, it will not be described in detail herein for ease of discussion. The matched filter option will be used in what follows because its description is easier to present and understand.

For matched filter processing of range and velocity, after we apply the beam masks according to Eqn. 5, we arrange the sequence of masked digital data samples $\tilde{v}_m$ in matrix form $\tilde{v}_{q,k}$, and apply a transformation to the matrix by multiplying the matrix elements by a phase factor that is the conjugate of the phase that we expect from a target at range $r'$ and velocity $v'$ (given by Eqn. 8a) and sum over all the samples. The result is an ambiguity function that estimates the strength of the scatterer at range $r'$, velocity $v'$, and bearing angles $\Omega'$:

$$X\left(r',v',\Omega'\right) = \sum_{q=0}^{Q-1}\sum_{k=0}^{K-1} \tilde{v}_{q,k}\, e^{j\frac{2\omega_q}{c}\left(r'+v'\left(q+kQ\right)\Delta t\right)}$$

$$\rightarrow X\left(\delta r,\delta v,\Omega,\Omega'\right) = V\sum_{q=0}^{Q-1}\sum_{k=0}^{K-1} e^{-j\frac{2\omega_q}{c}\left(\delta r+\delta v\left(q+kQ\right)\Delta t\right)}\, g_{q+kQ}\left(\Omega\right) g^{*}_{q+kQ}\left(\Omega'\right).$$

(Eqn. 9)

where $\delta r = r - r'$ and $\delta v = v - v'$ are the differences between the object range and velocity and the reference range and velocity, and we have assumed Eqn. 7 for the choice of beam mask.

To show that this processing approach produces a sharp peak when the reference range, velocity, and angles are equal to the object range, velocity, and angles we will assume that the coding matrix contains values of either +1 or -1 with 50% probability for each. This choice is the preferred embodiment of the coding matrix, although other choices are possible, such as N columns of an MxM Hadamard matrix avoiding the column of equal values. We will then show that the ambiguity function has the desired characteristics in an average sense. We will scale the coding matrix so that the sum of the squares of any row is unity, which will be the case (ideally) if the coding matrix values for the $m^{th}$ row and $n^{th}$ column represent the scattering parameter from the nth antenna element through the binary phase shifter to the summation network output without dissipative losses:

$$S_{m,n} = \frac{\varepsilon_{m,n}}{\sqrt{N}}.$$

(Eqn. 10)

where $\varepsilon_{m,n}$ is either +1 or -1 with 50% probability. Note that $\langle \varepsilon_m, \varepsilon_{m,n}\rangle = \delta_{n.n'}$ where the brackets $\langle\ \rangle$ denote an ensemble average value. Also, to simplify the mathematics we utilize a single index $m = q + kQ$. Inserting Eqn. 10 into Eqn. 9 using Eqn. 2 and computing the ensemble average value we have:

$$\left\langle X(\delta r,\delta v,\Omega,\Omega')\right\rangle = V\sum_{m=0}^{M-1} e^{-j\frac{2\omega_m}{c}(\delta r+\delta vm\Delta t)}\left\langle g_m(\Omega)g_m^*(\Omega')\right\rangle$$

$$= V\sum_{m=0}^{M-1} e^{-j\frac{2\omega_m}{c}(\delta r+\delta vm\Delta t)}\sum_{n=0}^{N-1}\sum_{n'=0}^{N-1}\left\langle S_{m,n}S_{m,n'}^*\right\rangle e_n(\Omega)e_{n'}^*(\Omega')$$

$$= V\sum_{m=0}^{M-1} e^{-j\frac{2\omega_m}{c}(\delta r+\delta vm\Delta t)}\frac{1}{N}\sum_{n=0}^{N-1}e_n(\Omega)e_{n'}^*(\Omega')$$

(Eqn. 11)

This is the same form of the ambiguity function as for a conventional radar sensor. The summation over m gives the range and velocity estimates, with a peak value at $\delta r = \delta v = 0$. Instead of the matched filter approach, it is preferable to utilize FFT processing on the beam masked signal $\tilde{v}_m$, a technique that is well known to those skilled in radar signal processing. The FFT approach to the processing is preferred due to the low latency and efficient use of hardware. The summation over $n$ gives the angular beam pattern of an antenna array with a uniformly weighted aperture as a function of $\Omega'$ with a peak value located at $\Omega$. Thus we have shown that, on average, the Type I CAR processing disclosed herein gives the same information as conventional radar signal processing. If FFT processing is used instead of matched filter processing, the results will be similar because the complex exponentials of the FFT are nearly the same as the function $f_m(r',v') = e^{j\frac{2\omega_m}{c}(r'+mv'\Delta t)}$ used for the matched filter, and the processing speed would be reduced. Although Type I coding produces the same results as conventional radar in an average sense, the ambiguity function fluctuates about the mean value, an effect referred to as residual ambiguity (and sometimes referred to as multiplicative noise). This effect adds pseudorandom "noise" to the computed radar estimates of range, velocity, and angles and this may pseudorandom "noise" be mitigated using Type II coding, described below. The primary advantage of CAR is that it provides similar results to conventional radar, which results are obtained using only a single transceiver, binary (as opposed to multi-bit) phase shifters, and range, velocity, and bearing angle estimates that are made from data collected in a single acquisition.

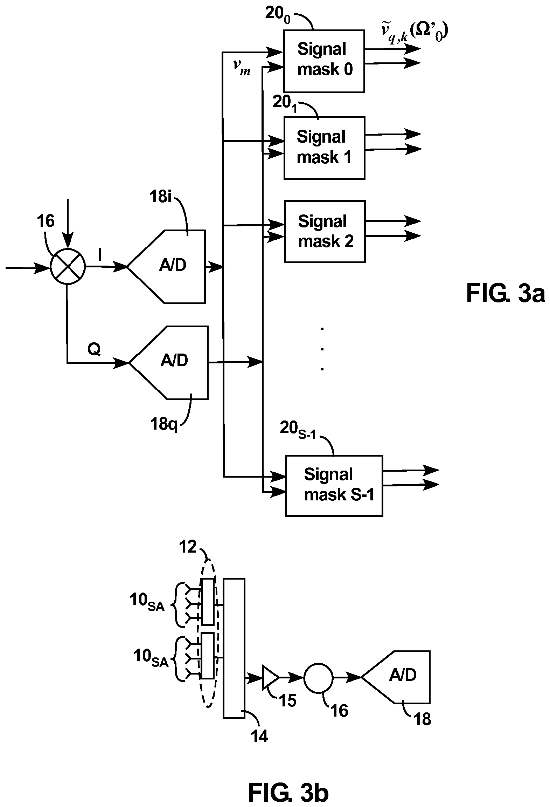

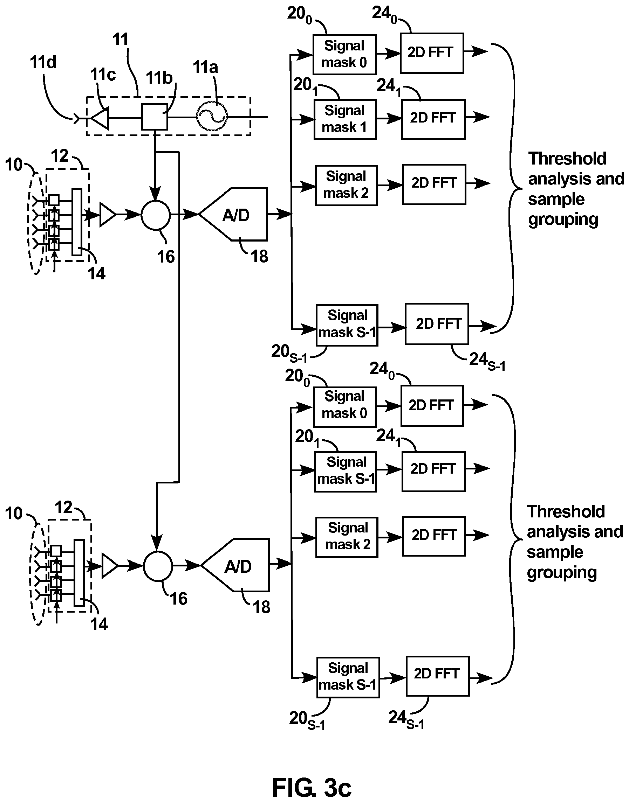

This Type I CAR processing approach may be conceptually implemented in digital hardware as depicted by the functional block diagram of Fig. 3 or it may be implemented in software. Even if implemented in software, software of course requires hardware and a hardware suite used to implement Fig. 3 may include one or more general purpose CPUs in addition to one or more Application Specific ICs (ASICs) designed to handle the FFT processing with greater ease than if only one or more CPUs were used.

After the mixer output signal is digitized by an analog to digital converter (ADC) 18, the digital signal is split into S parallel channels, with as many channels as beam directions to be processed in parallel. So each of the S parallel channels corresponds to a single synthesized beam position. For each channel we first apply a signal mask function $20_0 ... 20_{S-1}$, which multiplies each of the complex signal samples $v_m$ by the complex signal mask number $s_{m,s}$ stored in memory (m is the index for the signal sample and s is the index for the beam direction channel). The mixer 16 has both in-phase (I) and quadrature (Q) outputs, so that the mixer signal samples are complex, and the digital multiplications in the signal mask function $20_1 ... 20_{S-1}$ are therefore complex. See Fig. 3a where the mixer 16 is depicted with separate I and Q outputs and each output is applied to a separate ADC 18i and 18q. A single ADC 18 is often depicted in the art as being coupled with a mixer with I and Q outputs (as is done in the embodiments of Figs. 3 and Fig. 3c) it is understood both the I and Q channels are digitized.

After the signal mask is applied at $20_0 ... 20_{S-1}$, the M signal samples are separated (at east conceptually) into $K$ rows of $Q$ samples per row and a 2D FFT is preferably applied to that matrix of data at blocks $24_0 ... 24_{S-1}$. $M = Q$ times $K$ and S can be chosen independently, but will typically be equal to the number of antenna elements 10. Following the FFT at blocks $24_0 ... 24_{S-1}$, the elements down each column give the scattering strength at various range values for a particular velocity and the elements across rows give the scattering strength at various velocity values for each range bin. The results of the processing are estimates of the object scattering strength at all combinations of ranges, velocities, and beam positions. The word "complex" is used here in its mathematical sense, that is, the corresponding values have real and imaginary parts.

Preferably, there is a one-to-one relationship between antenna elements 10 and phase shifters 12 as is depicted by Fig. 3. But it is possible, in some embodiments (see Fig. 3a), to have several antenna elements 10 grouped together (summed in a subarray $10_{SA}$) that are then coupled with a single phase shifter 12. The drawback to this approach is the appearance of grating lobes in the element patterns because the subarrays would be spaced greater than $\lambda / 2$ apart from one another (where $\lambda$ is the wavelength of the nominal frequency of the radar system). Grating lobes are undesirable because they reduce gain and produce or receive spurious radiation in unwanted directions. The advantage of the embodiment of Fig. 3a is a lower cost.

Fig. 3c shows another alternative embodiment of the CAR processing technique described herein where a one to one relationship between antenna elements and 1-bit phase shifters is maintained, but where outputs of the antenna elements are the summed down to more than one port which ports are digitized independently by more than one A/D convertor 18. The advantage of this approach is an improvement in signal to noise ratio due to more than one receive channel, each collecting energy independently. The disadvantage is increased cost.

Only a few antenna elements 10 and phase shifters 12 are depicted in Figs. 3, 3b and 3c, it being understood that the number of antenna elements 10 and phase shifters 12 may be very large in some embodiments.

## Type II CAR coding

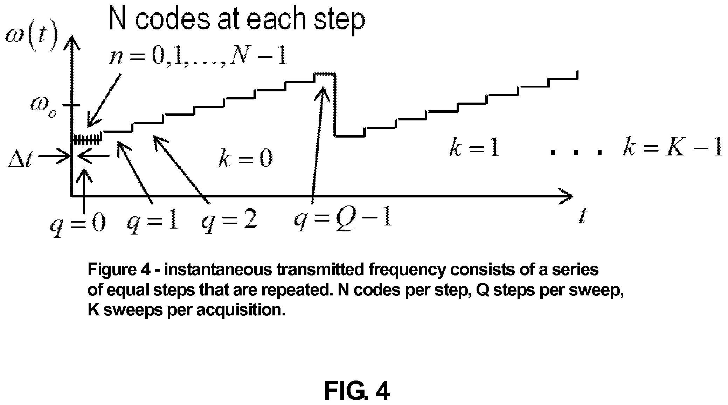

In the Type II CAR coding scheme, N codes are utilized during transmit at each frequency step, as indicated in Fig. 4, where N is preferably equal to the number of 1-bit phase shifters. The N one-bit transmit codes may be selected in the same manner as the one-bit receive codes applied to the one-bit phase shifters 12 (the selection may be pseudo-random, for example), but the resulting two matrices should not be chosen to be the same. Furthermore, since the transmit-receive code combination is just the product of the separate transmit and receive codes (it is well known to those skilled in the art that radar response is proportional to the product of the transmit modulation and receive modulation), the overall coding matrix is the element by element product of the transmit code matrix and the receive code matrix. One should therefore ensure that the overall coding matrix contains linearly independent columns.

Using more codes than the number of 1-bit phase shifters 12 does not result in further improvement in the reduction of residual ambiguity, but using fewer codes than the number of phase shifters 12 will not eliminate residual ambiguity, but will reduce it. These N codes (on transmit) and the binary control data applied to the 1-bit phase shifters 12 are single bit random codes which may be Hadarmard, pseudo-random, etc. These N codes may be repeated for each of the frequency steps of each of the sweeps during transmit. It is also possible to use different codes for each of the frequency steps, although this is unnecessary. In the following, as the preferred embodiment, we will assume the same set of N codes is used for all frequency steps and sweeps. For a single ideal scatterer at range r, radial velocity v, and angular position $\Omega$, the mixer output voltage with N codes at each frequency step has the form

$$v_{n,m} = Ve^{-j\frac{2\omega_m}{c}\left(r+v(n+mN)\Delta t\right)} g_n\left(\Omega\right) = Ve^{-j\frac{2\omega_m}{c}\left(r+v(n+mN)\Delta t\right)} \sum_{n'=0}^{N-1} S_{n,n'}e_{n'}\left(\Omega\right)$$

(Eqn. 12)

where n is the code index, $\omega_m$ are the radian frequency steps, $\Delta t$ is now the duration of each code period, and $V$ is the amplitude that depends on various radar parameters such as transmit power, radar cross section, antenna gain, etc. Note that the total length of the signal is NM (N times M) samples.

To process this signal, we first apply the signal mask $s_n\left(\Omega'\right)$ as before for each desired beam direction $\Omega'$, but now we sum the results for each set of N codes, forming a set of signals of length M, one for each beam direction:

$$\tilde{v}_m = \sum_{n=0}^{N-1} v_{n,m} s_n\left(\Omega'\right)$$

(Eqn. 13)

This procedure is almost identical to that of the Type I coding, the only difference being that, after multiplying by the signal mask, we sum sets of N successive masked signal samples. This additional summation adds an insignificant amount of additional complexity. The signal mask values may be chosen with the same considerations as for Type I signals. One would typically choose the number of codes N equal to the number of beam positions S so that $s_{n,s} = s_n(\Omega'_s)$ forms a square matrix. One may also choose the square coding matrix to be orthogonal, and this is our preferred embodiment.

To show that the result of this coding scheme and processing has the desired characteristics, we substitute

$$s_n\left(\Omega'\right) = \sum_{p=0}^{N-1} S^*_{n,p} e^*_p\left(\Omega'\right) :$$

Eqn. 12 into Eqn. 13 and utilize the matched filter choice of signal masks

$$\tilde{v}_m = V \sum_{n=0}^{N-1} e^{-j\frac{2\omega_m}{c}\left(r+v\left(n+mN\right)\Delta t\right)} \sum_{n'=0}^{N-1} S_{n,n'} e_{n'}\left(\Omega\right) \sum_{p=0}^{N-1} S^*_{n,p} e^*_p\left(\Omega'\right)$$

$$= V \sum_{n'=0}^{N-1} \sum_{p=0}^{N-1} e_{n'}\left(\Omega\right) e^*_p\left(\Omega'\right) \sum_{n=0}^{N-1} S_{n,n'} S^*_{n,p} e^{-j\frac{2\omega_m}{c}\left(r+v\left(n+mN\right)\Delta t\right)}$$

(Eqn. 14)

For practical radars the total acquisition time is designed to be short enough so that the fastest targets do not move through many range bins (preferably only one) since such movements blur the radar response. Given this fact, the movement during a single code duration $\Delta t$ is often negligibly small. From Eqn. 14, if we ensure that

$$\frac{2\omega_o}{c} v_{max} N\Delta t << 1 ,$$

(Eqn. 15)

then the last exponential factor in Eqn. 14 that depends on n may be neglected with little error. Using Eqn. 2 and Eqn. 3, then the condition of Eqn. 15 may be expressed as

$$Q >> \pi ,$$

(Eqn. 16)

a condition that is often satisfied in practice. Assuming this is the case, and using the fact that we have chosen an orthogonal coding matrix so that $S^H S = I/N$, where $I$ is the identity matrix, the M masked signals for each beam position become

$$\tilde{v}_m = V e^{-j\frac{2\omega_m}{c}\left(r+mNv\Delta t\right)} \sum_{n'=0}^{N-1} e_{n'}\left(\Omega\right) e^*_{n'}\left(\Omega'\right) .$$

(Eqn. 17)

These signals may then be organized into matrix form and processed by FFT (or some other scheme) to provide range/velocity information, as described above. For simplicity we will utilize the matched filter approach. Multiplying Eqn. 17 by the phase factor as in Eqn. 9, we obtain the ambiguity function

$$X\left(\delta r, \delta v, \Omega, \Omega'\right) = V \sum_{m=0}^{M-1} e^{-j\frac{2\omega_m}{c}\left(\delta r + mN\delta v \Delta t\right)} \frac{1}{N} \sum_{n'=0}^{N-1} e_{n'}\left(\Omega\right) e_{n'}^{*}\left(\Omega'\right)$$

(Eqn. 18)

which is the same as Eqn. 11, although this result does not contain the pseudo-random variations (i.e., residual ambiguity) of Type I coding. We point out that the digital processing hardware implementation is nearly identical to that of the Type I coding described above and shown in Fig. 3, except for the need for only one additional adder for each channel.

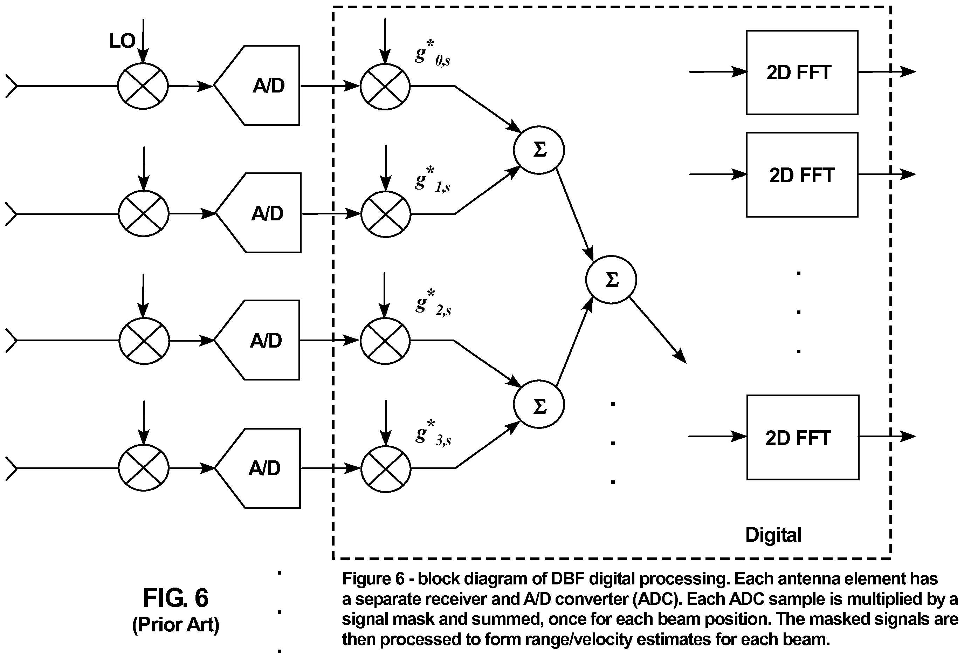

One of the primary advantages of CAR over a conventional digital beamforming (DBF) radar (depicted by Fig. 6) is a result of the simplicity of the digital processing especially when implemented according to the present invention. DBF radar utilizes a separate receiver and an ADC behind each receiving element. A central processor unit (CPU) may be used to processes the data from all of the elements to synthesize beams in the desired directions and (often) utilizes FFTs to provide range/velocity information. To provide a comparison of DBF and CAR, consider the N mixer output signals from a digital beamforming array that utilizes the same type of signal described above for CAR:

$$v_{m,n} = V e^{-j\frac{2\omega_m}{c}\left(r + mv\Delta t\right)} g_n\left(\Omega\right).$$   (Eqn. 19)

Although this has a similar form to Eqn. 12, the meaning of the indices is different. Here the index n refers to the antenna element and $\Delta t$ is the period of a frequency step. The $g_n(\Omega)$ is the complex antenna pattern for the $n$th antenna element. To form a single beam we must apply a set of weights across all of the element signals and sum them, and this should be repeated for every beam position. For matched filter beamforming we weight the element signals according to

$$\tilde{v}_{m,s} = \sum_{n=0}^{N-1} v_{m,n} g_n^{*}\left(\Omega'_s\right)$$   (Eqn. 20)

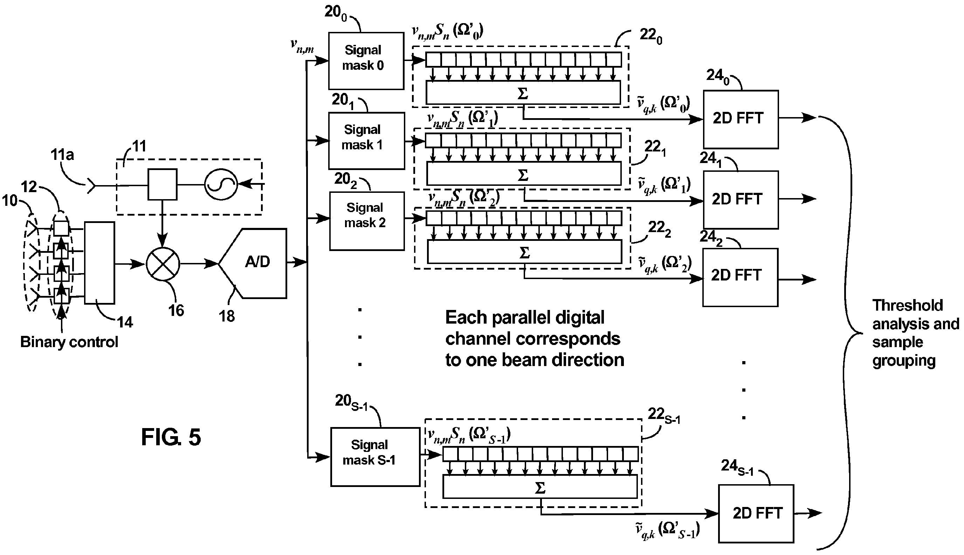

and then process the resulting weighted signals using FFTs or other conventional range/velocity processing techniques known in the art. Conventional FFT processing is indicated in block diagram form in Fig. 5 at blocks $24_0 \ldots 24_{S-1}$ thereof, which figure shall now be discussed in more detail.

This Type II CAR processing approach may be conceptually implemented in digital hardware as depicted by the functional block diagram of Fig. 5 or it may be implemented in software using one or more general purpose CPUs and possibly also one or more ASICs as is discussed above with reference to Fig. 3. Fig. 5 is rather similar to Fig. 3, which depicts a conceptual implementation of Type I CAR processing, but in Fig. 5 there is an added set of blocks $22_0 \ldots 22_{S-1}$ which do not appear in Fig. 3, which are needed for Type II CAR processing. Otherwise, the two figures are basically identical and use the same element numbers to refer to common elements between the Type I CAR and Type II CAR implementations.

In Fig, 5, after the mixer 16 output signal is digitized by an analog to digital converter (ADC) 18, the digital signal is split into S parallel channels, with as many channels as beam directions to be processed in parallel, as dome with Type I CAR. So each of the S parallel channels corresponds to a single synthesized beam position. For each channel we first apply a signal mask function $20_0 \ldots 20_{S-1}$, which multiplies each of the complex signal samples $v_m$ by the complex signal mask number $s_{m,s}$ stored in memory (m is the index for the signal sample and s is the index for the beam direction channel). The mixer 16 has both in-phase (I) and quadrature (Q) outputs, so that the mixer signal samples are complex, and the digital multiplications in the signal mask function $20_1 \ldots 20_{S-1}$ are therefore complex. See Fig. 3a where the mixer 16 is depicted with separate I and Q outputs and each output is applied to a separate ADC 18i and 18q. A single ADC 18 is often depicted in the art as being coupled with a mixer with I and Q outputs (as is done in the embodiments of Figs. 3, 5 and Fig. 3c) it is understood both the I and Q channels are digitized.

After the signal masks are applied at $20_0$ ... $20_{S-1}$, the M signal samples are separated (at least conceptually) into $K$ rows of $Q$ samples per row and a 2D FFT is preferably applied to the matrix of data at blocks $24_0$ ... $24_{S-1}$, as done in Type I CAR, except that N data samples are summed together at blocks $22_0$ ... $22_{S-1}$, after the signal masks are applied at block $20_0$ ... $20_{S-1}$, and before applying the results of thus summation to 2D FFT at blocks $24_0$ ... $24_{S-1}$. See US Patent Application Serial No._ filed on the same date as this application and entitled "Method and Apparatus for Reducing Noise in a Coded Aperture Radar" (Attorney Docket 628927-0) for a more in depth discussion of the hardware of Fig. 5 herein (which appears as Fig. 3 in that application).

CAR processing requires fewer digital computations than conventional DBF processing (see Fig. 6), and the advantage can be highly significant for large arrays. For CAR, we multiply each ADC sample by a complex number, and for Type II coding we then add groups of N masked signals. Since adds are much more time and hardware efficient than multiplies, it is sufficient to neglect the adds and only count multiplies when comparing computational complexities. The CAR signal mask requires the same number of multiplies as ADC samples, which is M for Type I coding and MN for Type II coding. In contrast DBF requires N multiplies (and 1 add) for each ADC sample, repeated for each of the N beams. This is a total of $N^2$ multiples for each sample (assuming the number of beams S is the same as the number of antenna elements N, as will often be the case). There are a total of M samples per acquisition, so the total number of multiplies is $MN^2$. Thus, we see that CAR has an advantage in computational requirements, requiring fewer computations than DBF by a factor of $N^2$ for Type I CAR and N for Type II CAR.

For both Type I CAR and N for Type II CAR, following the 2D FFT processing, the significant scatterers are typically identified by applying "thresholding" to the data outputted from the 2D FFT processing where any samples crossing a chosen threshold are retained and samples falling below that threshold are omitted. Additional processing may be applied to group significant samples together in order to identify single, large objects that may produce many different, but related, scattering events. Using such processing techniques, the radar sensor can provide functions such as, for example, identification of objects on a collision path with the host vehicle.

This concludes the description of embodiments of the present invention. The foregoing description of these embodiments has been presented for the purposes of illustration and description. It is not intended to be exhaustive or to limit the invention to the precise form or methods disclosed. Many modifications and variations are possible in light of the above teachings. It is intended that the scope of the invention be limited not by this detailed description, but rather by the claims appended hereto.

Broadly, this writing discloses at least the following:

A radar system in which Coded Aperture Radar processing is performed on received radar signals rflected by one or more objects in a field of view which reflect a transmitted signal which covers a field of view with $K$ sweeps and each sweep including $Q$ frequency changes. For Type II CAR, the transmitted signal also includes N modulated codes per frequency step. The received radar signals are modulated by a plurality of binary modulators the results of which are applied to a mixer. The output of the mixer, for one acquisition results in a set of $Q{\cdot}K$ (for Type I CAR) or $Q{\cdot}K{\cdot}N$ (for Type II CAR) complex data samples, is distributed among a number of digital channels, each corresponding to a desired beam direction. For each channel, the complex digital samples are multiplied, sample by sample, by a complex signal mask that is different for each channel. The signal mask values are chosen to produce the desired beam direction and desired sidelobe performance.

## Claims

1. A method of processing radar signals reflected from one or more objects in a field of view of a radar transmitter (11) transmitting the radar signals, the method comprising:

   a. receiving and modulating the radar signals reflected from the one or more objects by a plurality of binary phase shifters (10) to produce a set of modulated signals, the binary phase shifters (10) being controlled by binary coding data;

   b. summing (14) the modulated signals and down converting them, preferably to base band, by a mixer (16) producing in-phase and quadrature output signals which are each sampled and digitized by one or more A/D converters (18) to produce a set of real and imaginary digital values corresponding to the in-phase and quadrature output signals produced by the mixer (16) during an acquisition of the field of view;

   c. distributing real and imaginary digital values corresponding to the in-phase and quadrature output signals produced by the mixer (16) into a number (S) of channels, the number of channels being equal to a number (S) of desired radar beam directions to be processed concurrently and each channel having real and imaginary digital values corresponding to the digitized in-phase and quadrature signals output by the mixer (16);

   d. performing a complex multiplication ($20_0$ - $20_{S-1}$) using the real and imaginary digital values in each channel as one multiplicand and using real and imaginary values of a signal mask as the other multiplicand, the method comprising using a same number (S) of different signal masks as there are channels; one signal mask for each channel and for each channel being selected to produce a desired beam with desired characteristics for each channel, each complex multiplication producing a multiplication result which has both real and imaginary parts, the multiplication ($20_0$ - $20_{S-1}$) results or a summation of the multiplication ($20_0$ - $20_{S-1}$) results corresponding to the acquisition of the field of view being at least conceptually organizable into a two dimensional set or matrix with each column of the set or matrix corresponding to frequency steps of the transmitted radar signal and each row of the matrix corresponding to a different sweep of the transmitted radar signal;

e. transforming the real and imaginary parts of said multiplication ($20_0$ - $20_{S-1}$) results or of a summation of said multiplication ($20_0$ - $20_{S-1}$) results in said set or matrix using a transformational function ($24_0$ - $24_{S-1}$) which produces transformed data, conceptually as a set or matrix, wherein each position of the set or matrix of the transformed data reflects the scattering strength of an object in said field of view at a corresponding range with a corresponding radial velocity, with each column of the matrix of transformed data representing range bins and each row of the transformed data representing velocity bins.

2. The method of claim 1 wherein transmitted radar signals (8) are generated which reflect from said object(s) in said field of view, the transmitted radar signals (8) being generated in sweeps to cover said field of view, and wherein the transmitted radar signals (8) in each sweep being frequency modulated with Q frequency steps per sweep.

3. The method of claim 2 wherein K sweeps of said transmitted radar signals (8) are generated to complete an acquisition of said object(s) in said field of view.

4. The method of claim 3 wherein the product of Q times K equals the number of range and velocity bins.

5. The method of claim 4 wherein the number of range and velocity bins is selected independently of the number (S) of desired radar beam directions.

6. The method of claim 4 wherein for each frequency step of the transmitted radar signal in a sweep thereof, N codes are transmitted in the transmitted radar signals (8), and wherein after the multiplication ($20_0$ - $20_{S-1}$) result is obtained for each channel, N multi-bit multiplication ($20_0$ - $20_{S-1}$) results are summed together in each channel to produce said summation of the multiplication ($20_0$ - $20_{S-1}$) results for each of said channels, the summation of the multiplication ($20_0$ - $20_{S-1}$) results for each said channel containing real and imaginary parts, the real and imaginary parts of the summation of the multiplication ($20_0$ - $20_{S-1}$) results for each channel being applied to one of said transformational function ($24_0$ - $24_{S-1}$).

7. The method of claim 1 or 6 wherein said binary coding data comprises a matrix of elements which are randomly or pseudo-randomly selected.

8. The method of claim 7 wherein said elements comprise a Hadamard code.

9. The method of claim 7 wherein said elements are pseudo randomly selected with a 50% probably of each pseudo random binary state for each element in said matrix of elements.

10. The method of claim 6 wherein said desired characteristics of the desired beam for each channel comprises a desired beam direction with desired beam side lobe characteristic or characteristics.

11. The method of claim 1 or 6 wherein said transformational function ($24_0$ - $24_{S-1}$) comprises matched filter processing or an approximation of matched filter processing.

12. The method of claim 11 wherein the matched filter processing is approximated by a 2D FFT function performed on the real and imaginary parts of the multiplication ($20_0$ - $20_{S-1}$) result for each of said channels.

13. The method of claim 1 or 6 wherein a number of said binary phase shifters (10) are utilized and a number of said channels are provided and further wherein the number of said channels is equal to the number of said binary phase shifters (10).

14. The method of claim 1, wherein:

said multiplication ($20_0$ - $20_{S-1}$) result is a multi-bit multiplication result which has both real and imaginary parts; the method further comprising: summing a plurality of said multi-bit multiplication ($20_0$ - $20_{S-1}$) results together in each channel to produce a summation of the plurality multiplication ($20_0$ - $20_{S-1}$) results for each of said channels;

and transforming the real and imaginary parts of the summation of the plurality of multiplication ($20_0$ - $20_{S-1}$) results in said set or matrix.

15. An apparatus for processing radar signals reflected from one or more objects in a field of view of a radar transmitter transmitting the radar signals (8), the apparatus comprising:

a. a plurality of antenna elements (12) for receiving the radar signals (8) reflected from the one or more objects;

b. a plurality of one bit modulators (10) for modulating received radar signals (8) to produce a set of modulated signals, the one bit phase shifters (10) being controlled by binary coding data;

c. a summation block (14) for summing the modulated signals from the plurality of one bit modulators (10);

d. a mixer (16) coupled to summation block (14) for producing in-phase and quadrature output signals;

e. one or more A/D converters (18) which sample and digitize the in-phase and quadrature output signals from the mixer (16) to produce a set of real and imaginary digital values corresponding to the in-phase and quadrature output signals produced by the mixer (16) during an acquisition of the field of view;

f. an arrangement for distributing real and imaginary digital values corresponding to the in- phase and quadrature output signals produced by the mixer (16)_into a number (S) of channels, the number of channels being equal to a number (S) of desired radar beam directions to be processed concurrently and each channel conveying real and imaginary digital values corresponding to the digitized in-phase and quadrature signals output by the mixer;

g. means ($20_0$ - $20_{S-1}$) for performing a complex multiplication using the real and imaginary digital values in each channel as one multiplicand and using real and imaginary values of a signal mask as the other multiplicand, the apparatus comprising a same number (S) of different signal masks as there are channels; one signal mask for each channel and for each channel being selected to produce a desired beam with desired characteristics for each channel, each complex multiplication producing a multiplication result which has both real and imaginary parts, the multiplication results or a summation of the multiplication results corresponding the acquisition of the field of view being at least conceptually organizable into a two dimensional set or matrix with each column of the set or matrix corresponding to frequency steps of the transmitted radar signal and each row of the matrix corresponding to a different sweep of the transmitted radar signal;

h. means ($24_0$ - $24_{S-1}$) for transforming the real and imaginary parts of said multiplication results or of a summation of said multiplication results in said set or matrix using a transformational function which produces transformed data, conceptually as a set or matrix, wherein each position of the set or matrix of the transformed data reflects the scattering strength of an object in said field of view at a corresponding range with a corresponding radial velocity, with each column of the matrix of transformed data representing range bins and each row of the transformed data representing velocity bins.

**Patentansprüche**

1. Verfahren zur Verarbeitung von Radarsignalen, die von einem oder mehreren Objekten in einem Sichtfeld eines Radarsenders (11), der Radarsignale aussendet, reflektiert werden, wobei das Verfahren folgendes umfasst:

a. Empfangen und Modulieren der von dem einen oder mehreren Objekten reflektierten Radarsignale durch eine Mehrzahl binärer Phasenschieber (10), um eine Menge modulierter Signale zu erzeugen, wobei die binären Phasenschieber (10) durch binäre Codierungsdaten gesteuert werden;

b. Aufsummieren (14) der modulierten Signale und Abwärtswandeln dieser durch einen Mischer (16), vorzugsweise auf das Basisband, wobei phasengleiche und Quadraturausgangssignale erzeugt werden, die jeweils durch einen oder mehrere Analog-Digital-Wandler (18) abgetastet und digitalisiert werden, um eine Menge realer und imaginärer digitaler Werte zu erzeugen, die den durch den Mischer (16) während einer Erfassung des Sichtfelds erzeugten phasengleichen und Quadraturausgangssignalen entsprechen;

c. Verteilen der realen und imaginären digitalen Werte, die den durch den Mischer (16) erzeugten phasengleichen und Quadraturausgangssignalen entsprechen, in eine Anzahl (S) von Kanälen, wobei die Anzahl der Kanäle gleich einer Anzahl (S) gewünschter, gleichzeitig zu verarbeitender Radarstrahlrichtungen ist, und wobei jeder Kanal reale und imaginäre digitale Werte aufweist, die den digitalisierten phasengleichen und Quadratursignalen entsprechen, die durch den Mischer (16) ausgegeben werden;

d. Durchführen einer komplexen Multiplikation ($20_0$ - $20_{S-1}$) unter Verwendung der realen und imaginären digitalen Werte in jedem Kanal als einen Multiplikanden und unter Verwendung der realen und imaginären Werte einer Signalmaske als den anderen Multiplikanden, wobei das Verfahren das Verwenden einer gleichen Anzahl (S) verschiedener Signalmasken umfasst, wie Kanäle vorhanden sind; wobei eine Signalmaske für jeden Kanal bereitgestellt ist und für jeden Kanal ausgewählt wird, um einen gewünschten Strahl mit gewünschten Eigenschaften für jeden Kanal zu erzeugen, wobei jede komplexe Multiplikation ein Multiplikationsergebnis erzeugt, das sowohl reale als auch imaginäre Teile aufweist, wobei die Ergebnisse der Multiplikation ($20_0$ - $20_{S-1}$) oder eine Aufsummierung der Ergebnisse der Multiplikation ($20_0$ - $20_{S-1}$) der Erfassung des Sichtfelds entsprechen, das zumindest konzeptionell in eine zweidimensionale Menge oder Matrix organisiert werden kann, wobei jede Spalte der Menge oder der Matrix Frequenzstufen des ausgesendeten Radarsignals entspricht, und wobei jede Zeile der Matrix einem anderen Sweep des ausgesendeten Radarsignals entspricht;

e. Transformieren der realen und imaginären Teile der Ergebnisse Multiplikation ($20_0$ - $20_{S-1}$) oder einer Aufsummierung der Ergebnisse der Multiplikation ($20_0$ - $20_{S-1}$) in der Menge oder der Matrix unter Verwendung einer Transformationsfunktion ($24_0$ - $24_{S-1}$), wodurch transformierte Daten erzeugt werden, konzeptionell als eine Menge oder eine Matrix, wobei jede Position der Menge oder der Matrix der transformierten Daten die Streuungsstärke eines Objekts in dem Sichtfeld in einem bestimmten Entfernungsbereich mit einer entsprechenden Radialgeschwindigkeit darstellt, wobei jede Spalte der Matrix der transformierten Daten Range-Bins darstellt, und wobei jede Zeile der transformierten Daten Geschwindigkeits-Bins darstellt.

2. Verfahren nach Anspruch 1, wobei ausgesendete Radarsignale (8) erzeugt werden die von dem/den Objekt(en) in dem Sichtfeld reflektieren, wobei die ausgesendeten Radarsignale (8) in Sweeps erzeugt werden, so dass das Sichtfeld abgedeckt wird, und wobei die ausgesendeten Radarsignale (8) in jedem Sweep mit Q Frequenzstufen je Sweep frequenzmoduliert werden.

3. Verfahren nach Anspruch 2, wobei K Sweeps der ausgesendeten Radarsignale (8) erzeugt werden, um eine Erfassung des/der Objekt(e) in dem Sichtfeld vollständig auszuführen.

4. Verfahren nach Anspruch 3, wobei das Produkt von Q x K der Anzahl der Range- und der Geschwindigkeits-Bins entspricht.

5. Verfahren nach Anspruch 4, wobei die Anzahl der Range- und Geschwindigkeits-Bins unabhängig von der Anzahl (S) der gewünschten Radarstrahlrichtungen ausgewählt wird.

6. Verfahren nach Anspruch 4, wobei für jede Frequenzstufe des ausgesendeten Radarsignal in einem Sweep bzw. Umlauf dessen, N Codes in den ausgesendeten Radarsignalen (8) übermittelt werden, und wobei nachdem das Ergebnis der Multiplikation ($20_0$ - $20_{S-1}$) für jeden Kanal erhalten worden ist, N Ergebnisse der Multibit-Multiplikation ($20_0$ - $20_{S-1}$) in jedem Kanal aufsummiert werden, um die Aufsummierung der Ergebnisse der Multiplikation ($20_0$ - $20_{S-1}$) für jeden der Kanäle zu erzeugen, wobei die Aufsummierung der Ergebnisse der Multiplikation ($20_0$ - $20_{S-1}$) für jeden Kanal reale und imaginäre Teile enthält, wobei die realen und imaginären Teile der Aufsummierung der Ergebnisse der Multiplikation ($20_0$ - $20_{S-1}$) für jeden Kanal auf eine der Transformationsfunktionen ($24_0$ - $24_{S-1}$) angewendet werden.

7. Verfahren nach Anspruch 1 oder 6, wobei die binären Codierungsdaten eine Matrix von Elementen umfassen, die zufällig oder pseudozufällig ausgewählt werden.

8. Verfahren nach Anspruch 7, wobei die Elemente eine Hadamard-Code umfassen.

9. Verfahren nach Anspruch 7, wobei die Elemente pseudozufällig ausgewählt werden, mit einer fünfzigprozentigen Wahrscheinlichkeit jedes pseudozufälligen binären Zustands für jedes Element in der Matrix von Elementen.

10. Verfahren nach Anspruch 6, wobei die gewünschten Eigenschaften des gewünschten Strahls für jeden Kanal eine gewünschte Strahlrichtung mit gewünschter/gewünschten Nebenkeuleneigenschaft(en) umfassen.

11. Verfahren nach Anspruch 1 oder 6, wobei die Transformationsfunktion ($24_0$ - $24_{S-1}$) Optimalfilterverarbeitung oder eine Approximation der Optimalfilterverarbeitung umfasst.

12. Verfahren nach Anspruch 11, wobei die Optimalfilterverarbeitung näherungsweise bestimmt wird durch eine 2D FFT-Funktion, die an den realen und imaginären Teilen der Ergebnisse der Multiplikation ($20_0$ - $20_{S-1}$) für jeden der Kanäle ausgeführt wird.

**13.** Verfahren nach Anspruch 1 oder 6, wobei eine Anzahl der binären Phasenschieber (10) verwendet wird, und wobei ein Anzahl der Kanäle bereitgestellt wird, und wobei ferner die Anzahl der Kanäle gleich der Anzahl der binären Phasenschieber (10) ist.

**14.** Verfahren nach Anspruch 1, wobei:

das Ergebnis der Multiplikation ($20_0$ - $20_{S-1}$) ein Multibit-Multiplikationsergebnis ist, das sowohl reale als auch imaginäre Teile aufweist;
wobei das Verfahren ferner folgendes umfasst: Aufsummieren einer Mehrzahl der Ergebnisse der Multibit-Multiplikation ($20_0$ - $20_{S-1}$) in jedem Kanal, um eine Aufsummierung der Mehrzahl von Ergebnissen der Multiplikation ($20_0$ - $20_{S-1}$) für jeden der Kanäle zu erzeugen;
und Transformieren der realen und imaginären Teile der Aufsummierung der Mehrzahl von Ergebnissen der Multiplikation ($20_0$ - $20_{S-1}$) in der Menge oder Matrix.

**15.** Verfahren zur Verarbeitung von Radarsignalen, die von einem oder mehreren Objekten in einem Sichtfeld eines Radarsenders, der Radarsignale (8) aussendet, reflektiert werden, wobei die Vorrichtung folgendes umfasst:

a. eine Mehrzahl von Antennenelementen (12) zum Empfangen der von dem einen oder mehreren Objekten reflektierten Radarsignale (8);
b. eine Mehrzahl von Ein-Bit-Modulatoren (10) zur Modulation empfangener Radarsignale (8), um eine Menge modulierter Signale zu erzeugen, wobei die Ein-Bit-Phasenschieber (10) durch binäre Codierungsdaten gesteuert werden;
c. einen Aufsummierungsblock (14) zur Aufsummierung der modulierten Signale von der Mehrzahl von Ein-Bit-Modulatoren (10);
d. einen Mischer (16), der mit dem Aufsummierungsblock (14) verbunden ist, um phasengleiche und Quadraturausgangssignale zu erzeugen;
e. einen oder mehrere Analog-Digital-Wandler (18), welche die phasengleichen und Quadraturausgangssignale von dem Mischer (16) abtasten und digitalisieren, um eine Menge realer und imaginärer digitaler Werte zu erzeugen, die den durch den Mischer (16) während einer Erfassung des Sichtfelds erzeugten phasengleichen und Quadraturausgangssignalen entsprechen;
f. eine Anordnung zur Verteilung der realen und imaginären digitalen Werte entsprechend den durch den Mischer (16) erzeugen phasengleichen und Quadraturausgangssignalen in eine Anzahl (S) von Kanälen, wobei die Anzahl von Kanälen gleich einer Anzahl (S) gewünschter, gleichzeitig zu verarbeitender Radarstrahlrichtungen ist, und wobei jeder Kanal reale und imaginäre digitale Werte überträgt, die den digitalisierten phasengleichen und Quadratursignalen entsprechen, die durch den Mischer ausgegeben werden;
g. Mittel ($20_0$ - $20_{S-1}$) zur Durchführung einer komplexen Multiplikation unter Verwendung der realen und imaginären digitalen Werte in jedem Kanal als einen Multiplikanden und unter Verwendung der realen und imaginären Werte einer Signalmaske als den anderen Multiplikanden, wobei die Vorrichtung eine gleiche Anzahl (S) verschiedener Signalmasken umfasst, wie Kanäle vorhanden sind; wobei eine Signalmaske für jeden Kanal bereitgestellt ist und für jeden Kanal ausgewählt wird, um einen gewünschten Strahl mit gewünschten Eigenschaften für jeden Kanal zu erzeugen, wobei jede komplexe Multiplikation ein Multiplikationsergebnis erzeugt, das sowohl reale als auch imaginäre Teile aufweist, wobei die Ergebnisse der Multiplikation oder eine Aufsummierung der Ergebnisse der Multiplikation der Erfassung des Sichtfelds entsprechen, das zumindest konzeptionell in eine zweidimensionale Menge oder Matrix organisiert werden kann, wobei jede Spalte der Menge oder der Matrix Frequenzstufen des ausgesendeten Radarsignals entspricht, und wobei jede Zeile der Matrix einem anderen Sweep des ausgesendeten Radarsignals entspricht;
h. Mittel ($24_0$ - $24_{S-1}$) zum Transformieren der realen und imaginären Teile der Ergebnisse Multiplikation oder einer Aufsummierung der Ergebnisse der Multiplikation in der Menge oder der Matrix unter Verwendung einer Transformationsfunktion, wodurch transformierte Daten erzeugt werden, konzeptionell als eine Menge oder eine Matrix, wobei jede Position der Menge oder der Matrix der transformierten Daten die Streuungsstärke eines Objekts in dem Sichtfeld in einem bestimmten Entfernungsbereich mit einer entsprechenden Radialgeschwindigkeit darstellt, wobei jede Spalte der Matrix der transformierten Daten Range-Bins darstellt, und wobei jede Zeile der transformierten Daten Geschwindigkeits-Bins darstellt.

**Revendications**

1. Procédé de traitement de signaux radar réfléchis par au moins un objet dans un champ de vision d'un émetteur radar (11) transmettant les signaux radar, le procédé comprenant les étapes consistant à :

   a. recevoir et moduler les signaux radar réfléchis par l'au moins un objet par une pluralité de déphaseurs binaires (10) pour produire un ensemble de signaux modulés, les déphaseurs binaires (10) étant commandés par des données de codage binaires ;

   b. additionner (14) les signaux modulés et les convertir vers le bas, de préférence en bande de base, par un mélangeur (16) produisant des signaux de sortie en phase et en quadrature qui sont chacun échantillonnés et numérisés par au moins un convertisseur A/N (18) pour produire un ensemble de valeurs numériques réelles et imaginaires correspondant aux signaux de sortie en phase et en quadrature produits par le mélangeur (16) pendant une acquisition du champ de vision ;

   c. distribuer des valeurs numériques réelles et imaginaires correspondant aux signaux de sortie en phase et en quadrature produits par le mélangeur (16) dans un nombre (S) de canaux, le nombre de canaux étant égal à un nombre (S) de directions de faisceau radar souhaitées à traiter simultanément et chaque canal ayant des valeurs numériques réelles et imaginaires correspondant aux signaux numérisés en phase et en quadrature produits par le mélangeur (16) ;

   d. effectuer une multiplication complexe ($20_0$ - $20_{S-1}$) en utilisant les valeurs numériques réelles et imaginaires dans chaque canal comme un multiplicande et en utilisant les valeurs réelles et imaginaires d'un masque de signal comme l'autre multiplicande, le procédé comprenant l'étape consistant à utiliser un même nombre (S) de masques de signal différents qu'il y a de canaux ; un masque de signal pour chaque canal et pour chaque canal étant sélectionné pour produire un faisceau souhaité avec des caractéristiques souhaitées pour chaque canal, chaque multiplication complexe produisant un résultat de multiplication qui a à la fois des parties réelles et imaginaires, les résultats de multiplication ($20_0$ - $20_{S-1}$) ou une sommation des résultats de multiplication ($20_0$ - $20_{S-1}$) correspondant à l'acquisition du champ de vision pouvant être organisés au moins conceptuellement en un ensemble ou une matrice bidimensionnel, chaque colonne de l'ensemble ou de la matrice correspondant à des échelons de fréquence du signal radar transmis et chaque ligne de la matrice correspondant à un balayage différent du signal radar transmis ;

   e. transformer les parties réelles et imaginaires des résultats de ladite multiplication ($20_0$ - $20_{S-1}$) ou d'une sommation des résultats de ladite multiplication ($20_0$ - $20_{S-1}$) dans ledit ensemble ou ladite matrice en utilisant une fonction de transformation ($24_0$ - $24_{S-1}$) qui produit des données transformées, conceptuellement comme un ensemble ou une matrice, chaque position de l'ensemble ou de la matrice des données transformées réfléchissant l'intensité de diffusion d'un objet dans ledit champ de vision à une distance correspondante avec une vitesse radiale correspondante, chaque colonne de la matrice des données transformées représentant des cellules de distance et chaque ligne des données transformées représentant des cellules de vitesse.

2. Procédé selon la revendication 1, des signaux radar transmis (8) étant générés qui sont réfléchis par ledit ou lesdits objets dans ledit champ de vision, les signaux radar transmis (8) étant générés en balayages pour couvrir ledit champ de vision, et les signaux radar transmis (8) dans chaque balayage étant modulés en fréquence avec des échelons de fréquence Q par balayage.

3. Procédé selon la revendication 2, K balayages desdits signaux radar transmis (8) étant générés pour terminer une acquisition dudit ou desdits objets dans ledit champ de vision.

4. Procédé selon la revendication 3, le produit de Q par K étant égal au nombre de cellules de distance et de vitesse.

5. Procédé selon la revendication 4, le nombre de cellules de distance et de vitesse étant sélectionné indépendamment du nombre (S) de directions de faisceau radar souhaitées.

6. Procédé selon la revendication 4, pour chaque échelon de fréquence du signal radar transmis dans un balayage de celui-ci, N codes étant transmis dans les signaux radar transmis (8), et après que le résultat de la multiplication ($20_0$ - $20_{S-1}$) a été obtenu pour chaque canal, N résultats de multiplication multibit ($20_0$ - $20_{S-1}$) étant additionnés ensemble dans chaque canal pour produire ladite sommation des résultats de multiplication ($20_0$ - $20_{S-1}$) pour chacun desdits canaux, la sommation des résultats de multiplication ($20_0$ - $20_{S-1}$) pour chacun desdits canaux contenant des parties réelles et imaginaires, les parties réelles et imaginaires de la sommation des résultats de multiplication ($20_0$ - $20_{S-1}$) pour chaque canal étant appliquées à l'une desdites fonctions de transformation ($24_0$ - $24_{S-1}$).

7. Procédé selon la revendication 1 ou 6, lesdites données de codage binaires comprenant une matrice d'éléments qui sont sélectionnés de manière aléatoire ou pseudo-aléatoire.

8. Procédé selon la revendication 7, lesdits éléments comprenant un code Hadamard.

9. Procédé selon la revendication 7, lesdits éléments étant sélectionnés de manière pseudo-aléatoire avec une probabilité de 50 % de chaque état binaire pseudo-aléatoire pour chaque élément dans ladite matrice d'éléments.

10. Procédé selon la revendication 6, lesdites caractéristiques souhaitées du faisceau souhaité pour chaque canal comprenant une direction de faisceau souhaitée avec une ou des caractéristiques de lobes latéraux de faisceau souhaitées.

11. Procédé selon la revendication 1 ou 6, ladite fonction de transformation ($24_0$ - $24_{S-1}$) comprenant un traitement à filtre adapté ou une approximation de traitement à filtre adapté.

12. Procédé selon la revendication 11, le traitement à filtre adapté étant approximé par une fonction FFT 2D exécutée sur les parties réelles et imaginaires du résultat de multiplication ($20_0$ - $20_{S-1}$) pour chacun desdits canaux.

13. Procédé selon la revendication 1 ou 6, un certain nombre desdits déphaseurs binaires (10) étant utilisés et un certain nombre desdits canaux étant fournis, et, en outre, le nombre desdits canaux étant égal au nombre desdits déphaseurs binaires (10).

14. Procédé selon la revendication 1 :

   ledit résultat de multiplication ($20_0$ - $20_{S-1}$) étant un résultat de multiplication multi-bit qui a des parties réelles et imaginaires ;
   le procédé comprenant en outre les étapes consistant à : additionner une pluralité desdits résultats de multiplication multi-bit ($20_0$ - $20_{S-1}$) ensemble dans chaque canal pour produire une sommation de la pluralité de résultats de multiplication ($20_0$ - $20_{S-1}$) pour chacun desdits canaux ;
   et transformer les parties réelles et imaginaires de la sommation de la pluralité de résultats de multiplication ($20_0$ - $20_{S-1}$) dans ledit ensemble ou ladite matrice.

15. Appareil pour traiter des signaux radar réfléchis par au moins un objet dans un champ de vision d'un émetteur radar transmettant les signaux radar (8), l'appareil comprenant :

   a. une pluralité d'éléments d'antenne (12) pour recevoir les signaux radar (8) réfléchis par l'au moins un objet ;
   b. une pluralité de modulateurs à un bit (10) pour moduler les signaux radar (8) reçus afin de produire un ensemble de signaux modulés, les déphaseurs à un bit (10) étant commandés par des données de codage binaires ;
   c. un bloc de sommation (14) pour additionner les signaux modulés provenant de la pluralité de modulateurs à un bit (10) ;
   d. un mélangeur (16) couplé au bloc de sommation (14) pour produire des signaux de sortie en phase et en quadrature ;
   e. au moins un convertisseur A/N (18) qui échantillonne et numérise les signaux de sortie en phase et en quadrature provenant du mélangeur (16) pour produire un ensemble de valeurs numériques réelles et imaginaires correspondant aux signaux de sortie en phase et en quadrature produits par le mélangeur (16) pendant une acquisition du champ de vision ;
   f. un dispositif pour distribuer des valeurs numériques réelles et imaginaires correspondant aux signaux de sortie en phase et en quadrature produits par le mélangeur (16) dans un nombre (S) de canaux, le nombre de canaux étant égal à un nombre (S) de directions de faisceau radar souhaitées à traiter simultanément et chaque canal transportant des valeurs numériques réelles et imaginaires correspondant aux signaux numérisés en phase et en quadrature produits par le mélangeur ;
   g. un moyen ($20_0$ - $20_{S-1}$) pour effectuer une multiplication complexe en utilisant les valeurs numériques réelles et imaginaires dans chaque canal comme un multiplicande et en utilisant les valeurs réelles et imaginaires d'un masque de signal comme l'autre multiplicande, l'appareil comprenant un même nombre (S) de masques de signal différents qu'il y a de canaux ; un masque de signal pour chaque canal et pour chaque canal étant sélectionné pour produire un faisceau souhaité avec des caractéristiques souhaitées pour chaque canal, chaque multiplication complexe produisant un résultat de multiplication qui a à la fois des parties réelles et imaginaires, les résultats de multiplication ou une sommation des résultats de multiplication correspondant à l'acquisition du champ de vision pouvant être organisés au moins conceptuellement en un ensemble ou une matrice bidimensionnel, chaque colonne de l'ensemble ou de la matrice correspondant à des échelons de fréquence du signal radar transmis et chaque ligne de la matrice correspondant à un balayage différent du signal radar transmis ;

h. un moyen ($24_0$ - $24_{S-1}$) pour transformer les parties réelles et imaginaires desdits résultats de multiplication ou d'une sommation desdits résultats de multiplication dans ledit ensemble ou ladite matrice en utilisant une fonction de transformation qui produit des données transformées, conceptuellement sous la forme d'un ensemble ou d'une matrice, chaque position de l'ensemble ou de la matrice des données transformées réfléchissant la force de diffusion d'un objet dans ledit champ de vision à une distance correspondante avec une vitesse radiale correspondante, chaque colonne de la matrice de données transformées représentant des cellules de distance et chaque ligne des données transformées représentant des cellules de vitesse.

EP 3 077 848 B1

Binary phase
shifters

**FIG. 1**

**FIG. 2**

**FIG. 3**

Fig. 3 - A block diagram of CAR Type I digital processing. The digitized mixer signal is split into paralell processing channels, one for each beam position. After applying a signal mask ,the masked signal in each channel is organized into a matirx and a 2D FFT is applied for range/velocity estimates. The result is a range/velocity matrix for each beam position.

$20_0$

$\tilde{v}_{q,k}(\Omega'_0)$

Signal
mask 0

$v_m$

$20_1$

Signal
mask 1

18i

16

I

A/D

Signal
mask 2

**FIG. 3a**

Q

A/D

18q

$20_{S-1}$

Signal
mask S-1

12

$10_{SA}$

$10_{SA}$

14

15

16

A/D

18

**FIG. 3b**

FIG. 3c

Figure 4 - instantaneous transmitted frequency consists of a series of equal steps that are repeated. N codes per step, Q steps per sweep, K sweeps per acquisition.

**FIG. 4**

EP 3 077 848 B1

FIG. 5

Binary control

Each parallel digital channel corresponds to one beam direction

Threshold analysis and sample grouping

**FIG. 6**
**(Prior Art)**

Figure 6 - block diagram of DBF digital processing. Each antenna element has a separate receiver and A/D converter (ADC). Each ADC sample is multiplied by a signal mask and summed, once for each beam position. The masked signals are then processed to form range/velocity estimates for each beam.

EP 3 077 848 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61912990
- US 56111114
- US 49060712
- US 13490607 B
- US 2013169485 A1
- US 72562112
- US 56114214